# EUROPÄISCHE PATENTANMELDUNG

(11) **EP 1 187 064 A1**
(43) Veröffentlichungstag der Anmeldung: **13.03.2002**
(21) Anmeldenummer: 00119163.4
(22) Anmeldetag: 05.09.2000
(51) Int. Cl.: G06K 19/07

(54) **Verfahren zur Serienherstellung von Chipkarten, insbesondere SIM-Karten**

(71) Anmelder: ACG Aktiengesellschaft für Chipkarten und Informationssysteme, 65189 Wiesbaden (DE)
(72) Erfinder: Gossel, Sven, 80634 München (DE)
(74) Vertreter: Paul, Dieter-Alfred, Dipl.-Ing.

(57) **Zusammenfassung**

Die Erfindung bezieht sich auf ein Verfahren zur Serienherstellung von Chipkarten, insbesondere von SIM-Karten, das die folgenden Schritte umfaßt:
es wird eine Software erstellt;
die Software wird auf einen Chip aufgebracht;
der Chip wird in ein Modul eingebettet;
kartenbezogene und benutzerbezogene Personalisierungsdaten werden auf den Chip aufgebracht;
das Chipmodul wird in eine Karte aus insbesondere Kunststoff eingebettet;
wobei das Verfahren dadurch gekennzeichnet ist, daß die kartenbezogenen Personalisierungsdaten in einem Produktionsschritt mit der Chipmodulherstellung auf die Chips aufgebracht werden und die benutzerbezogenen Personalisierungsdaten getrennt von den kartenbezogenen Personalisierungsdaten in einem späteren Produktionsschritt auf den Chip aufgebracht werden.

## Beschreibung

Die vorliegende Erfindung betrifft ein Verfahren zur Serienherstellung von Chipkarten, insbesondere von SIM-Karten, das die folgenden Schritte umfaßt:
es wird eine Software erstellt;
die Software wird auf einen Chip aufgebracht;
der Chip wird in ein Modul eingebettet;
kartenbezogene und benutzerbezogene Personalisierungsdaten werden auf den Chip aufgebracht;
das Chipmodul wird in eine Karte aus insbesondere Kunststoff eingebettet.

Die Erfindung befaßt sich somit in erster Linie mit der Herstellung von sogenannten SIM-Karten (Subscriber Identity Module), d.h. Mobilfunkkarten, die ins Mobiltelefon eingesteckt und durch eine Eingabe einer PIN aktiviert werden müssen, um mit dem Mobiltelefon selbst telefonieren oder Anrufe entgegennehmen zu können. In einem Chip auf der SIM-Karte sind die Informationen gespeichert, die das Mobiltelefon braucht, um sich nach dem Einschalten an einem Mobilfunknetz anzumelden. Die Daten, die hierzu auf dem Chip gespeichert sein müssen, werden Personalisierungsdaten genannt, wobei man zwischen kartenbezogenen Personalisierungsdaten, die für alle Karten identisch sind, und benutzerbezogenen Personalisierungsdaten, welche die Karte individualisieren wie beispielsweise die Seriennummer, die PIN-Nummer etc. voneinander unterscheidet.

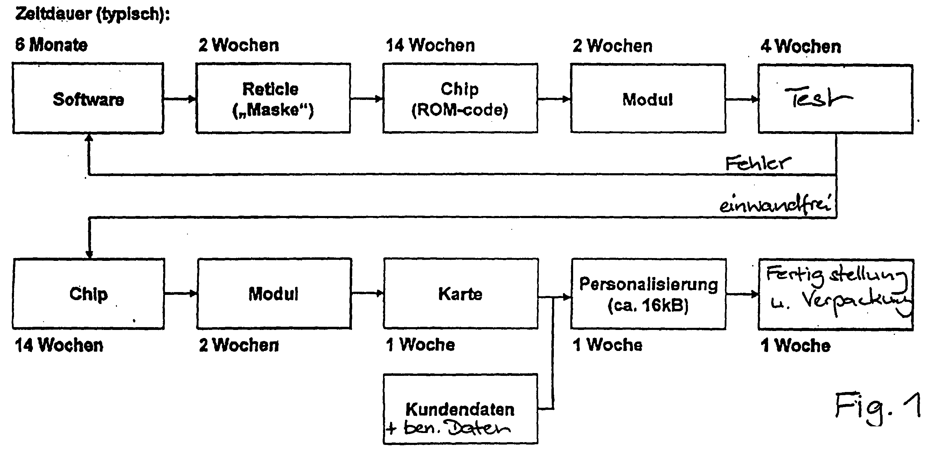

Die Herstellung von SIM-Karten erfolgt heute üblicherweise in der in Figur 1 schematisch dargestellten und nachfolgend beschriebenen Weise:

An erster Stelle erfolgt die Softwareentwicklung, die einen Zeitraum von etwa 6 Monaten in Anspruch nimmt. Basierend auf dieser Software wird eine Maske erstellt, auf deren Grundlage wiederum ein ROM-Chip hergestellt wird. Hierfür werden etwa 16 Wochen benötigt. Der Chip wird anschließend in ein Modul eingebettet und getestet (ca. 6 Wochen). Beim Auftreten von Fehlern wird die Software modifiziert und der Prozeß der Maskenherstellung, Chipherstellung, Modulproduktion, Überprüfung und Modifizierung wird wiederholt, bis die Testergebnisse einwandfrei sind. Erst dann beginnt die Serienproduktion, wobei zunächst die ROM-Chips hergestellt und in ein Modul eingebettet werden, was etwa 16 Wochen in Anspruch nimmt. Anschließend werden Kunststoffkarten hergestellt und gegebenenfalls bedruckt und die Chipmodule in die Karten eingebettet. Anschließend werden auf die Chips die Personalisierungsdaten aufgebracht.

Der zuvor beschriebene Prozeß ist sehr aufwendig und führt einerseits zu erheblichen Lieferzeiten und zum anderen zu erheblichen Produktionskosten.

Aufgabe der Erfindung ist es daher, ein Verfahren zur Serienherstellung von Chipkarten der eingangs genannten Art in der Weise weiterzubilden, daß die Produktionszeiten sowie Produktionskosten herabgesetzt werden können.

Diese Aufgabe ist erfindungsgemäß dadurch gelöst, daß die kartenbezogenen Personalisierungsdaten in einem Produktionsschritt mit der Chipmodulherstellung auf die Chips aufgebracht werden und die benutzerbezogenen Personalisierungsdaten getrennt von den kartenbezogenen Personalisierungsdaten in einem späteren Produktionsschritt auf die Chips aufgebracht werden. Der Erfindung liegt damit der Gedanke zugrunde, die Personalisierung der Chips nicht wie im Stand der Technik in einem Produktionsschritt vorzunehmen, sondern zunächst im Rahmen einer Vorpersonalisierung die kundenspezifischen, d.h. kartenbezogenen Personalisierungsdaten im Produktionsschritt der Modulherstellung vorzunehmen. Die Chipmodule müssen nämlich unmittelbar nach ihrer Herstellung von einem Testgerät auf ihre Funktionsfähigkeit getestet werden, was üblicherweise etwa 4 bis 5 Sekunden in Anspruch nimmt. Genau diese Zeit wird nun genutzt, um die Vorpersonalisierung vorzunehmen. Dabei kann durch eine entsprechende Anzahl von Programmierköpfen sichergestellt werden, daß durch die Vorpersonalisierung, die etwa 20 bis 80 Sekunden in Anspruch nimmt, die Modulherstellung und - überprüfung nicht verlangsamt werden. Hierdurch kann die Zeit für eine Personalisierung in einem separaten Produktionsschritt erheblich herabgesetzt werden. Dies bringt eine erhebliche Senkung der Produktionskosten mit sich. Dies liegt daran, daß es sich bei den noch aufzubringenden benutzerbezogenen Personalisierungsdaten wie beispielsweise den Schlüssel- und die ID-Nummern um sicherheitsrelevante Daten handelt, die nur in entsprechenden Sicherheitsumgebungen auf den Chip aufgebracht werden dürfen. Während im Stand der Technik die gesamten Personalisierungsdaten gleichzeitig in einer Sicherheitsumgebung auf die Chips aufgebracht werden, wozu etwa eine Programmierzeit von einer Minute erforderlich ist, brauchen die Chips durch die erfindungsgemäß vorgenommene Aufgliederung der Personalisierung nur die Zeit in einer Sicherheitsumgebung zu verbringen, die benötigt wird, um die benutzerbezogenen Personalisierungsdaten auf einen Chip aufzubringen. Diese beträgt jedoch nur wenige Sekunden, so daß die Investitionen für die Sicherheitsumgebungen und Kontrollmaßnahmen gering sind.

Gemäß einer bevorzugten Ausführungsform ist vorgesehen, daß die benutzerbezogenen Personalisierungsdaten im Produktionsschritt der automatischen Einbettung der Chipmodule in die Karten auf den Chip aufgebracht werden. Durch diese In-Line-Aufbringung der benutzerbezogenen Personalisierungsdaten während des Einbettungsprozesses der Module können die Produktionszeiten weiter herabgesetzt werden, da diese Daten nicht mehr in einem separaten Produktionsschritt eingebracht zu werden brauchen.

Gemäß einem weiteren Aspekt der vorliegenden Erfindung werden Flashcontroller anstelle der bisher verwendeten ROMs für die Chips eingesetzt. Hierdurch können Entwicklungslose wie im Stand der Technik vermieden und die langwierigen Chipproduktionen umgangen werden. Mit einer entsprechenden Softwareplattform, die die Portierung von Software auf andere Halbleiter verkürzt (Hardware Abstraction Layer), kann diese Software dann in Verbindung mit den Flashcontrollern sofort eingesetzt werden. Langwierige Entwicklungs- und Testzeiten entfallen daher bzw. können erheblich verkürzt werden.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: ein Ablaufdiagramm, das die Entwicklung und Herstellung von Chipkarten gemäß dem Stand der Technik darstellt und
- Figur 2: ein Flußdiagramm, das das Verfahren zur Serienherstellung von Chipkarten gemäß der vorliegenden Erfindung darstellt.

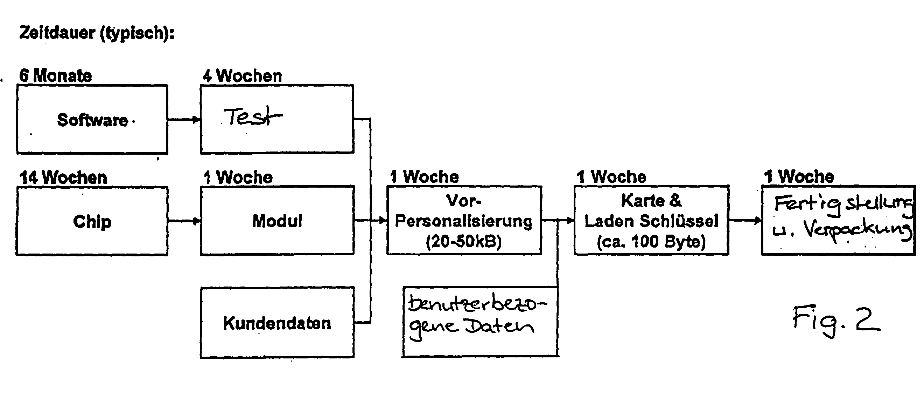

Nach dem in Figur 2 dargestellten Verfahren zur Serienherstellung von Chipkarten gemäß der vorliegenden Erfindung erfolgt zunächst die Entwicklung einer entsprechenden Software, die wie im Stand der Technik etwa 6 Monate in Anspruch nimmt. Diese Software ist so gestaltet, daß sie die Portierung auf andere Halbleiter auf ein Zeitminimum und Kostenminimum verkürzt (Hardware Abstraction Layer) und in Verbindung mit Flashcontrollern einsatzfähig ist. Parallel zu dieser Softwareentwicklung werden die Flashcontroller-Chips hergestellt. Die Chips werden dann in üblicher Weise durch entsprechende Maschinen in Module eingebettet und im Anschluß daran mit der entwikkelten Software programmiert. Die so programmierten Chipmodule werden durch beispielsweise Transportbänder zu einem Testgerät transportiert und dort auf ihre Funktionsfähigkeit getestet. Dieser Testmodus ist an sich bekannt und soll deshalb an dieser Stelle nicht weiter beschrieben werden. Interessant ist lediglich, daß für jeden Chip eine Testzeit von 20 bis 80 Sekunden erforderlich ist, weshalb gleichzeitig jeweils mehrere Chips getestet werden, um den Prozeß der Modulherstellung und der Programmierung nicht zu verlangsamen.

Im Anschluß an die Überprüfung der Funktionsfähigkeit werden auf die funktionstüchtigen Chipmodule die Vorpersonalisierungsdaten, d.h. die kartenbezogenen Personalisierungsdaten, aufgebracht, wozu entsprechende Programmierköpfe vorgesehen sind, zu denen die Chipmodule automatisch weitertransportiert werden. Da die Vorpersonalisierung mehr Zeit in Anspruch nimmt als der vorher durchgeführte Funktionstest, erfolgt eine Parallelprogrammierung mehrerer Chips, wozu entsprechend viele Programmierköpfe vorgesehen sind.

Die so fertiggestellten und mit den Vorpersonalisierungsdaten programmierten Chipmodule werden anschließend in üblicher Weise in Kunststoffkarten eingebettet. Hierzu werden in bevorzugter Weise vorgefertigte Kunststoffrohlinge mit einer entsprechenden Kavität und Plug-in-Form verwendet. Der Einbettung vorgeschaltet oder nachgeschaltet, jedoch in dem gleichen Produktionsschritt, erfolgt die Aufbringung der benutzerbezogenen Personalisierungsdaten auf die Chips. Diese Personalisierungsschritt, welcher der einzige sicherheitsrelevante Schritt in der Produktion darstellt, da nur hier die Schlüssel und ID-Nummern eingetragen werden, wird in einer Sicherungsumgebung durchgeführt. Da für diesen Teil der Personalisierung nur wenige Sekunden erforderlich sind, können die Investitionen für Sicherheitsumgebungen gering gehalten werden.

Es hat sich gezeigt, daß durch die Anwendung des erfindungsgemäßen Verfahrens, d.h. den Einsatz von Flashcontrollern anstelle von ROMs, die Vorpersonalisierung im Rahmen der Modulherstellung und die Aufbringung der benutzerbezogenen Personalisierungsdaten während der Moduleinbettung in die Karten die Produktionszeiten und -kosten erheblich gesenkt werden können.

## Patentansprüche

1. Verfahren zur Serienherstellung von Chipkarten, insbesondere von SIM-Karten, das die folgenden Schritte umfaßt:
es wird eine Software erstellt;
die Software wird auf einen Chip aufgebracht;
der Chip wird in ein Modul eingebettet;
kartenbezogene und benutzerbezogene Personalisierungsdaten werden auf den Chip aufgebracht;
das Chipmodul wird in eine Karte aus insbesondere Kunststoff eingebettet;
wobei das Verfahren **dadurch gekennzeichnet ist, daß**
die kartenbezogenen Personalisierungsdaten in einem Produktionsschritt mit der Chipmodulherstellung auf die Chips aufgebracht werden und
die benutzerbezogenen Personalisierungsdaten getrennt von den kartenbezogenen Personalisierungsdaten in einem späteren Produktionsschritt auf die Chips aufgebracht werden.

2. Verfahren nach Anspruch 1, **dadurch gekennzeichnet, daß** die benutzerbezogenen Personalisierungsdaten im Produktionsschritt der automatischen Einbettung der Chipmodule in die Karten auf den Chip aufgebracht werden.

3. Verfahren nach Anspruch 1 oder 2, **dadurch gekennzeichnet, daß** die Chipmodule von einem Testgerät auf ihre Funktionsfähigkeit getestet werden und die benutzerbezogenen Personalisierungsdaten im Rahmen dieses Testbetriebs auf die Chips aufgebracht werden.

4. Verfahren nach Anspruch 2 oder 3, **dadurch gekennzeichnet, daß** die Software in einem Produktionsschritt mit der Chipmodulproduktion erfolgt.

5. Verfahren nach einem der Ansprüche 1 bis 4, **dadurch gekennzeichnet, daß** Flashcontroller für die Chips eingesetzt werden.

6. Verfahren nach einem der vorherigen Ansprüche, **dadurch gekennzeichnet, daß** vorgefertigte Karten mit einer Kavität für die einzubettenden Chipmodule verwendet werden.

7. Verfahren nach Anspruch 6, **dadurch gekennzeichnet, daß** vorgefertigte Karten mit einer Kavität und Plug-in-Form für die einzubettenden Chips verwendet werden.
